(19) Europäisches Patentamt
European Patent Office
Office européen des brevets

(11) Veröffentlichungsnummer: **0 032 109**
**B1**

(12) # EUROPÄISCHE PATENTSCHRIFT

(45) Veröffentlichungstag der Patentschrift: **18.05.83**

(51) Int. Cl.[3]: **C 09 B 67/48**, C 09 B 29/085, C 09 B 67/10

(21) Anmeldenummer: **80810407.9**

(22) Anmeldetag: **22.12.80**

(54) **Färbestabiler Dispersionsfarbstoff und dessen Verwendung zum Färben und Bedrucken synthetischer und halbsynthetischer Fasermaterialien.**

(30) Priorität: **27.12.79 CH 11460/79**
**09.01.80 CH 134/80**

(43) Veröffentlichungstag der Anmeldung: **15.07.81 Patentblatt 81/28**

(45) Bekanntmachung des Hinweises auf die Patenterteilung: **18.05.83 Patentblatt 83/20**

(84) Benannte Vertragsstaaten: **CH DE FR GB LI**

(56) Entgegenhaltungen:
**CH-A-561 756**
**DE-A-2 336 717**
**FR-A-2 255 352**
**US-A-2 007 382**

(73) Patentinhaber: **CIBA-GEIGY AG, Patentabteilung Postfach, CH-4002 Basel (CH)**

(72) Erfinder: **Eugster, Peter, Dr., Mattweg 96, CH-4144 Arlesheim (CH)**
Erfinder: **Koller, Stefan, Dr., Zelglistrasse, CH-4431 Ramlinsburg (CH)**

**EP 0 032 109 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Färbestabiler Dispersionsfarbstoff und dessen Verwendung zum Färben und Bedrucken synthetischer und halbsynthetischer Fasermaterialien

Die vorliegende Erfindung betrifft eine neue färbestabile kristallographische Modifikation des Azofarbstoffes der Formel

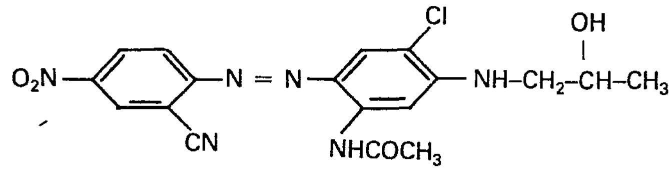

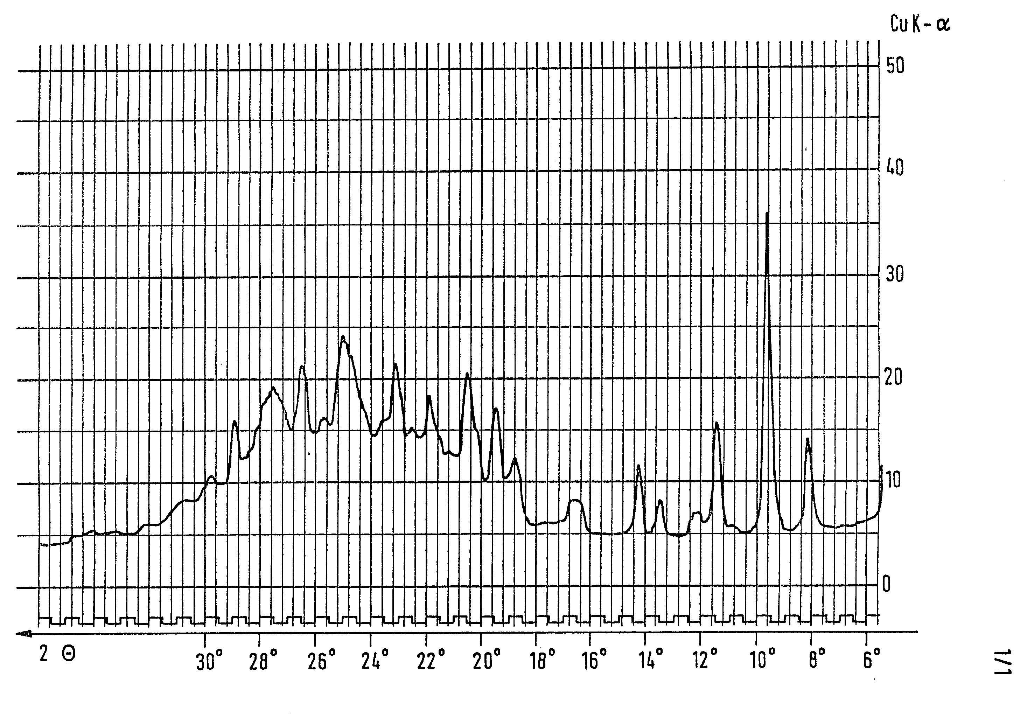

die durch das in Fig. 1 gezeigte, mit CuK-α1-Strahlung aufgenommene Röntgenbeugungsdiagramm mit den charakteristischen Reflexen und die aus dem Beugungsbild errechneten d-Werte der Netzebenenabstände charakterisiert ist, wobei im folgenden nur die Linien sehr starker (ss) und starker (s) relativer Intensität berücksichtigt sind: d[Å]: 10.9 s, 9.1 ss, 7.7 s, 6.2 s, 4.58 s, 4.34 s, 3.86 s, 3.57 s, 3.37 s, 3.09 s.

Bekannt ist die kristallographisch amorphe Modifikation des Farbstoffes der vorstehend genannten Formel, mit einem Erweichungsbereich unterhalb von 90 °C und dessen Verwendung zum Färben und Bedrucken von Textilmaterial, insbesondere von Polyesterfasermaterial.

Der Farbstoff kann nach dem aus der schweizerischen Patentschrift 561 756 bekannten Verfahren durch Kuppeln von diazotiertem 2-Cyano-4-nitroanilin und 1-[N-(β-hydroxypropyl)-amino]-2-chlor-5-acetylamino-benzol in wässrigem Medium hergestellt werden. Dabei fällt er in einer amorphen Form an, die unter den in der Färbeflotte auftretenden Bedingungen nicht ausreichend stabil ist.

Die neue färbestabile Modifikation gemäss vorliegender Erfindung, im folgenden als ε-Modifikation bezeichnet, erhält man durch rasches Erhitzen einer wässrigen Suspension des amorphen Farbstoffs, die gegebenenfalls einen anionischen Dispergator enthält, auf Temperaturen oberhalb 90 °C bis zur vollständigen Bildung einer flüssigen Farbstoffschmelze, diese wird gewünschtenfalls durch gleichzeitiges oder vorzugsweise erst durch anschliessendes kräftiges Rühren in der Wasserphase fein verteilt und die gebildete Suspension auf dieser Temperatur gehalten, bis die Schmelze völlig durchkristallisiert ist.

Die Umwandlung des amorphen in den kristallinen Farbstoff lässt sich leicht durch die Aufnahme von Röntgenbeugungsspektren und die Bestimmung von Schmelzpunkten verfolgen.

Zur Herstellung der neuen färbestabilen ε-Modifikation geht man zweckmässig direkt von der wässrigen Kupplungssuspension des Azofarbstoffes aus, wie sie bei der Herstellung des Farbstoffes nach dem Kuppeln anfällt. Diese wird zunächst rasch auf eine Temperatur von 90 bis 130 °C, gegebenenfalls unter Druck, vorzugsweise 93 bis 100 °C erhitzt. Dabei geht der amorphe Farbstoff in eine flüssige Schmelze über, die auf der Wasserphase aufschwimmt. Zweckmässig erst anschliessend wird der geschmolzene Farbstoff durch starkes Rühren zu kleinen Tröpfchen zerschlagen und so in der Wasserphase fein verteilt. Dann wird die Suspension bei 90 bis 130 °C, vorzugsweise 93 bis 100 °C, kräftig gerührt, bis die Farbstofftröpfchen völlig durchkristallisiert sind; in der Praxis benötigt man dazu 0,5 bis 10, vorzugsweise 2 bis 5 Stunden. Die Kristallisation kann gegebenenfalls durch Zugabe von Impfkristallen der ε-Modifikation eingeleitet werden. Die färbestabile ε-Modifikation wird nach ihrer Herstellung beispielsweise durch Filtrieren von der wässrigen Phase abgetrennt und einem bekannten Finish unterworfen.

Um zum Färben und Drucken technisch geeignete Farbstoffpräparate zu erhalten, kann die erfindungsgemässe ε-Modifikation durch übliche mechanische Verfahren, gegebenenfalls in Gegenwart von Wasser und geeigneter Dispergiermittel und anderer üblicher Zusätze in hohe Feinverteilung überführt werden.

Für die gegebenenfalls vorzunehmende Feinverteilung eignen sich die üblichen Vorrichtungen, wie Mühlen, beispielsweise Kugelmühlen, Schwingmühlen, Sandmühlen oder Kneter. Als Dispergiermittel kommen beispielsweise Kondensationsprodukte von ein- oder mehrkernigen aromatischen Verbindungen, wie Naphthalin, Naphthole, Phenole oder deren Sulfonsäure, mit Formaldehyd oder anderen Substanzen, die mit aromatischen Ringen kondensieren können, wie Harnstoff, Äthylenoxid oder Isocyanate, gegebenenfalls unter Zusatz von Natriumsulfit, ferner Ligninsulfonate und nichtionische oder anionische oberflächenaktive Verbindungen in Betracht.

Unter Färbebedingungen, wie hoher Temperatur und in Gegenwart von Färbereihilfsmitteln, ändert sich die neue färbestabile ε-Modifikation hinsichtlich Kristallgrösse und Kristallform nicht mehr, so dass die färberischen Eigenschaften und die Stabilität der Dispersion im Gegensatz zur färbeinstabilen amorphen Modifikation dabei nicht beeinträchtigt werden.

Die in hohe Feinverteilung übergeführte neue Farbstoffmodifikation eignet sich vorzüglich zum Färben von synthetischen und halbsynthetischen Textilmaterialien, wie synthetischen linearen Polyestern, z.B. Polyäthylenglykolterephthalat oder chemisch analog aufgebauten Polymeren und von halbsynthetischen Fasermaterialien, wie Cellulosetriacetat, bei Temperaturen von ungefähr 100 bis 220 °C. Die neue Farbstoffmodifikation ist unter Färbebedingungen dispersionsstabil und weist dabei nicht die Nachteile der auf übliche Weise

erhältlichen instabilen amorphen Modifikation des genannten Farbstoffes auf, bei Färbeverfahren, bei denen sie längere Zeit im wässrigen Medium einer höheren Temperatur ausgesetzt ist, zu Farbstoffausflockungen und Abfiltrationen zu führen, die oft ungleichmässige Färbungen mit schlechten Reibechtheiten liefern. Insbesondere beim Färben von Wickelkörpern – beispielsweise Kreuzspulen – treten auch dann keine Agglomeration, Flockung und schliesslich Abfiltration des Farbstoffes an den Spulen auf, wenn die Färbeflotte nur langsam erschöpft wird oder wenn mit einem so grossen Farbstoffüberschuss gearbeitet wird, dass niemals eine Erschöpfung des Färbebades eintritt. Deshalb ist die neue Farbstoffmodifikation besonders in der Apparatefärberei für loses Material und beim Färben von Spulen oder von Garnen hervorragend geeignet.

In den folgenden Beispielen beziehen sich Angaben über Teile, sofern nicht anders vermekrt, auf das Gewicht.

Das Röntgenbeugungsbild wurde mit CuK-α1-Strahlung (λ = 1.5405 Å) aufgenommen. Als Eichsubstanz wurde α-Quarz verwendet. Dessen d-Werte sind aus a = 4.913 Å und c = 5.405 Å berechnet. Die relativen Linienintensitäten sind visuell geschätzt.

Beispiel 1

Die durch Kuppeln von 74 Teilen diazotiertem 2-Cyano-4-nitroanilin mit 95 Teilen 1-[N-(β-Hydroxypropyl)-amino]-2-chloro-5-acetylaminobenzol erhaltene Kupplungssuspension des amorphen Azofarbstoffs wird durch direktes Aufheizen, z.B. durch Einleiten von Sattdampf, rasch auf 95 °C erhitzt. Dabei geht der Farbstoff in eine dünnflüssige Schmelze über, die auf der Oberfläche der wässrigen Phase aufrahmt. Durch anschliessendes intensives Rühren bei 95 °C wird die flüssige organische Farbstoffphase zu kleinen Tröpfchen zerschlagen und in der Wasserphase fein verteilt. Nach 3stündigem Rühren bei 93–98 °C sind die feinen Farbstofftröpfchen als kristallines Farbstoffgranulat (∅ ca. 0,2–15 mm, vorwiegend ca. 0,5–2 mm) in der gewünschten ε-Modifikation durchkristallisiert. Das Granulat, das sich gut filtrieren lässt, wird abgenutscht, auf der Nutsche mit 50 °C heissem Wasser gewaschen und trocken gesaugt. Der feuchte Nutschkuchen wird anschliessend bei 70–80 °C im Vakuum getrocknet.

Der ursprünglich in der amorphen Modifikation vorliegende Farbstoff ist vollständig in die neue ε-Modifikation übergeführt worden. Smp: 168–176 °C (unkorr).

Beispiel 2

10 Teile der nach Beispiel 1 hergestellten, färbestabilen ε-Modifikation des Farbstoffes werden unter Zusatz von 5 Teilen eines Kondensationsproduktes einer Naphthalinsulfonsäure mit Formaldehyd in 60 Teilen Wasser mittels einer Glasperlenmühle bis zu einer ausreichenden Feinverteilung gemahlen. Anschliessend gibt man 15 Teile eines Oxyligninsulfonates zu und trocknet in einer Sprühapparatur.

In einem Druckfärbeapparat werden 40 g der so erhaltenen Farbstoffdispersion in 40 Liter Wasser von 70 °C, das 4 g Oleylpolyglykoläther enthält, suspendiert. Der pH-Wert des Färbebades wird mit Essigsäure auf 4 bis 5 eingestellt. Damit färbt man einen Wickelkörper aus 2000 g Polyäthylenglykolterephthalatgarn, indem man die Temperatur des Färbebades innerhalb von 30 Minuten von 70 auf 130 °C erhöht und 50 Minuten bei dieser Temperatur hält. Nach der üblichen Fertigstellung der Färbung erhält man einen egal blaustichig rotgefärbten Wickelkörper ohne Flecken- oder Farbstoffablagerungen.

Verwendet man 10 Teile der nach Beispiel 1 erhaltenen färbeinstabilen amorphen Modifikation des Farbstoffes und verfährt im übrigen wie im obigen Beispiel angegeben, so erhält man eine blaustichig rote jedoch unegale, unbrauchbare, reibunechte Färbung mit Farbstoffablagerungen auf der Oberfläche des gefärbten Materials.

**Patentansprüche**

1. Färbestabile Modifikation des Farbstoffes der Formel

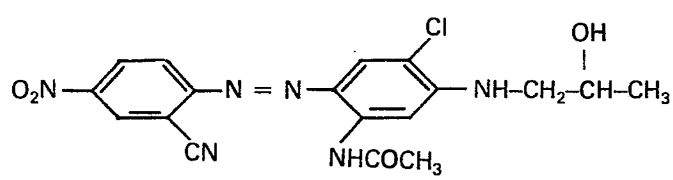

gekennzeichnet durch das in Fig. 1 gezeigte Röntgenbeugungsdiagramm (CuK-α-Strahlung) mit den charakteristischen Reflexen und die aus dem Beugungsbild errechneten d-Werte der Netzebenenabstände:
d [Å]: 10.9 s, 9.1 ss, 7.7 s, 6.2 s, 4.58 s, 4.34 s, 3.86 s, 3.57 s, 3.37 s, 3.09 s.

2. Verfahren zur Herstellung der färbestabilen ε-Modifikation gemäss Patentanspruch 1, dadurch gekennzeichnet, dass man den kristallographisch amorphen Farbstoff der angegebenen Formel in wässriger Suspension rasch auf Temperaturen oberhalb 90 °C bis zur Bildung einer flüssigen Farbstoffschmelze erhitzt und die Suspension auf dieser Temperatur hält, bis die Schmelze völlig durchkristallisiert ist.

3. Verfahren gemäss Patentanspruch 2, dadurch gekennzeichnet, dass man die flüssige Farbstoffschmelze durch kräftiges Rühren in der Wasserphase fein verteilt und die Suspension 0,5 bis 10 Stunden, vorzugsweise 2 bis 5 Stunden, auf einer Temperatur von 90 bis 130 °C, vorzugsweise 93 bis 100 °C, hält.

4. Verfahren gemäss Patentanspruch 2 und 3,

dadurch gekennzeichnet, dass man direkt von der bei der Herstellung des amorphen Azofarbstoffes anfallenden wässrigen Kupplungssuspension ausgeht.

5. Verwendung der färbestabilen ε-Modifikation des Azofarbstoffes gemäss Patentanspruch 1 zum Färben und Bedrucken von synthetischen oder halbsynthetischen Fasermaterialien.

**Revendications**

1. Variété stable à la teinture du colorant de formule

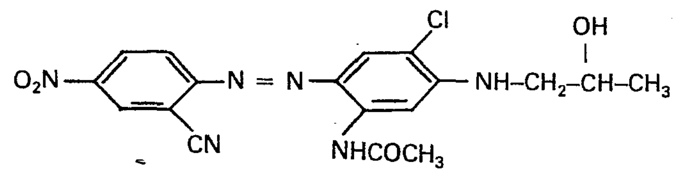

caractérisée par la figure de diffraction aux rayons X (rayonnement CuK-α) présentée sur la Figure 1, avec les angles de réflexion caractéristiques et les valeurs d des écartements des plans réticulaires, calculées à partir de la figure de diffraction:
d [Å]: 10,9 s, 9.1 ss, 7.7 s, 6.2 s, 4.58 s, 4.34 s, 3.86 s, 3.57 s, 3.37 s, 3.09 s.

2. Procédé de préparation de la variété ε stable à la teinture selon la revendication 1, caractérisé en ce que l'on chauffe rapidement à des températures supérieures à 90 °C, jusqu'à la formation d'une masse fondue liquide du colorant, le colorant cristallographiquement amorphe ayant la formule indiquée ci-dessus, en suspension aqueuse, et que l'on maintient la suspension à cette température jusqu'à ce que la masse fondue se soit totalement prise en masse.

3. Procédé selon la revendication 2, caractérisé en ce que l'on met la masse fondue liquide du colorant à l'état finement divisé par une forte agitation dans la phase aqueuse, et que l'on maintient la suspension dans la phase aqueuse, et que l'on maintient la suspension pendant 0,5 à 10 heures, de préférence pendant 2 à 5 heures, à une température de 90 à 130 °C, de préférence de 93 à 100 °C.

4. Procédé selon l'une quelconque des revendications 2 ou 3, caractérisé en ce que l'on part directement de la suspension aqueuse de copulation obtenue lors de la préparation du colorant azoïque amorphe.

5. Utilisation de la variété ε stable à la teinture du colorant azoïque selon la revendication 1, pour teindre et imprimer des matériaux en fibres synthétiques ou semi-synthétiques.

**Claims**

1. A modification of the dye of the formula

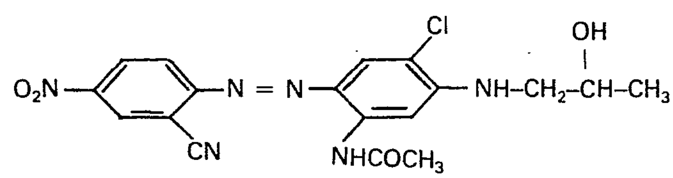

which modification is stable to dyeing and which is characterised by the X-ray diffraction pattern (CuK-α radiation) with the characteristic reflexes shown in Fig. 1, and by the d values of the interplanar spacings, calculated from the diffraction pattern:
d [Å]: 10.9 s, 9.1 ss, 7.7 s, 6.2 s, 4.58 s, 4.34 s, 3.86 s, 3.57 s, 3.37 s, 3.09 s.

2. A process for producing the ε-modification stable to dyeing according to Claim 1, which process comprises rapidly heating the crystallographically amorphous dye of the given formula, in an aqueous suspension, to a temperature above 90 °C until a liquid dye melt is formed, and holding the suspension at this temperature until the melt is fully crystallised throughout.

3. A process according to Claim 2, wherein the liquid dye melt is finely dispersed in the aqueous phase by vigorous stirring, and the suspension is held for 0,5 to 10 hours, preferably 2 to 5 hours, at a temperature of 90 to 130 °C, preferably 93 to 100 °C.

4. A process according to Claims 2 and 3, wherein as starting material there is used directly the aqueous coupling suspension occurring in the production of the amorphous azo dye.

5. A process for dyeing and printing synthetic or semi-synthetic fibre materials by application of the ε-modification of the azo dye according to Claim 1, which modification is stable to dyeing.

1/1